# EUROPÄISCHE PATENTSCHRIFT

(11) **EP 1 943 710 B1**
(45) Veröffentlichungstag und Bekanntmachung des Hinweises auf die Patenterteilung: **20.05.2015**
(21) Anmeldenummer: 06806484.9
(22) Anmeldetag: 24.10.2006
(51) Int. Cl.: H02K 3/52, H02K 15/095

(54) **ELEKTROMOTOR UND WICKELVERFAHREN**
ELECTRIC MOTOR AND WINDING METHOD
MOTEUR ELECTRIQUE ET PROCEDE DE BOBINAGE

(30) Priorität: 26.10.2005 DE 102005051508
(43) Veröffentlichungstag der Anmeldung: 16.07.2008
(73) Patentinhaber: SEW-EURODRIVE GmbH & Co. KG, 76646 Bruchsal (DE)
(72) Erfinder: HEYNER, Yvonne, 76698 Ubstadt-Weiher (DE); SCHÜLER, Gerd, 56291 Badenhard (DE); ÖZCAN, Abdulvahap, 76753 Waghäusel (DE); RHODE, Stephan, 76139 Karlsruhe (DE); BOERMANN, Friedrich, 76646 Bruchsal (DE)
(86) Internationale Anmeldenummer: PCT/EP2006/010217
(87) Internationale Veröffentlichungsnummer: WO 2007/048566

(56) Entgegenhaltungen:
- EP-A- 1 420 505
- EP-A1- 1 191 665
- EP-A2- 1 235 327
- WO-A2-2005/020408
- GB-A- 2 310 766
- JP-A- 6 225 491
- JP-A- 2000 134 850
- US-A- 4 287 446
- US-A1- 2005 006 518

## Beschreibung

Die Erfindung betrifft einen Elektromotor und ein Wickelverfahren.

Aus der JP2003102152A ist ein Stator bekannt, der in Dreieckschaltung beschaltet ist.

Aus der EP 1 467 466 A2 ist ein Stator bekannt, der von einer Wickelmaschine gewickelt wird. Allerdings sind gemäß Figur 9a am oberen und unteren axialen Ende Greifer notwendig, die - wie in Figur 9a gezeigt - den Wicklungsdraht in radialer Richtung herausziehen müssen, damit der Stator weitergedreht werden kann. Am Außenumfang wird der Draht abgelegt.

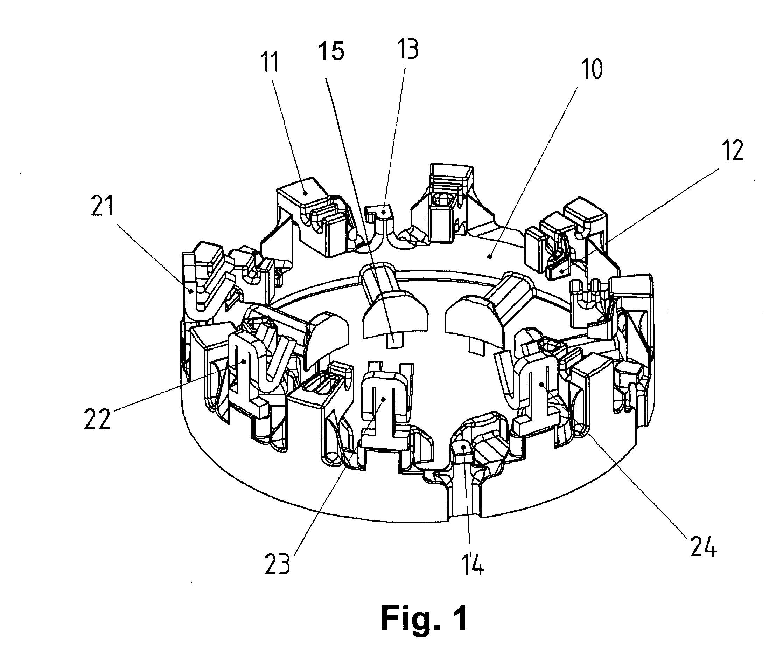

Aus der US 4 287 446 A ist ein Stator für einen Schrittmotor bekannt, wobei die Wicklungsdrähte mit Versorgungsleitungen an Kontaktelementen (Bezugszeichen 54 in Abbildung 1 der US 4 287 446 A) verbunden sind. Diese Kontaktelemente sind in Ausnehmungen von pfostenartigen Erhebungen eines am Statorblechpaket angeordneten Kunststoffteils eingesteckt, wobei sich Wicklungsdrähte verschiedener Spulenwicklungen im Bereich der Pfosten berühren. Dabei sind die Spulenwicklungen radial innerhalb und die Berührberieche radial außerhalb der Pfosten angeordnet.

Aus der EP 1 191 665 A1 ein Stator für Asynchronmotoren bekannt, der ebenfalls Wicklungsdrähte radial außerhalb von Umlenkpfosten aufweist.

Aus der WO 2005 / 020 408 A2 ist ein entsprechender Reluktanzmotor bekannt.

Aus der JP 06 225491 A und der JP 2000 134850 A ist ebenfalls ein Kunststoffteil gezeigt, das am Statorblechpaket vorgesehen ist.

Aus der EP 1 420 505 A1 ist ein Wickelverfahren zum Herstellen eines Stators eines Elektromotors, das ein bloßes Verschieben der Nadel benutzt.

Der Erfindung liegt daher die Aufgabe zugrunde, ein Herstellungs-Verfahren und einen Elektromotor weiterzubilden, wobei eine möglichst einfache Herstellung erreichbar ist und wenig Teile notwendig sind.

Erfindungsgemäß wird die Aufgabe bei dem Elektromotor nach den in Anspruch 1 oder 13 und bei dem Wickelverfahren nach den in Anspruch 12 angegebenen Merkmalen gelöst.

Wichtige Merkmale der Erfindung bei dem Elektromotor sind, dass er Stator und dessen Spulenwicklungen umfasst, wobei die gesamte Verschaltung der Spulenwicklungen an einer Endscheibe ausführbar ist.

Von Vorteil ist dabei, dass zum Wickeln keine schwenkbare Nadel benötigt wird. Die Nadel muss also nur in radialer und axialer Richtung bewegbar sein und kann dabei stets in derselben Orientierung verbleiben. Sie wird also sozusagen nur parallel verschoben. Der Stator ist jedoch drehbar zu lagern. Ein Stanzgitter oder eine Verschaltungsplatine ist nicht notwendig sondern die Nadel führt die Verschaltung aus, indem der Wicklungsdraht auf den Kontakthaken auf der Endscheibe abgelegt werden. Somit entfallen im Vergleich zum Stand der Technik viele Verbindungspunkte und die verbundenen Qualitätsrisiken.

Da keine Nadelumklappung notwendig ist, entfallen entsprechende Zeitspannen beim Wickeln und die Wickelzeit wird insgesamt kürzer.

Der Abstand zum Gehäuse ist aufgrund der Drahtführung innerhalb des Wickelkopfes unkritisch. Es ist also keine Zusatz-Flächenisolation notwendig, die durch die Drahtführung bedingt wäre.

Vorteil ist also auch, dass ein zentrales Teil, nämlich die Endscheibe vorhanden ist, das nicht nur die Toleranzen bestimmt sondern auch formschlüssige Verbindungsschnittstellen zum Blechpaket und zu elektrischen Anschlussvorrichtungen, wie Kontakthaken, zur Verfügung stellt. Die Endscheibe wird am axialen Ende des Stator-Blechpakets verbunden, also sozusagen als letzte Scheibe des Blechpakets.

Bei einer vorteilhaften Ausgestaltung weist die Endscheibe an einem axialen Ende des Statorblechpakets vorgesehen ist. Von Vorteil ist dabei, dass die Endscheibe quasi als letzte Scheibe anordenbar ist und somit die Herstellung des Stators sehr einfach und kostengünstig ist.

Bei einer vorteilhaften Ausgestaltung ist die Endscheibe mit dem Statorblechpaket formschlüssig verbunden, insbesondere in Umfangsrichtung. Von Vorteil ist dabei, dass Erhebungen der Endscheibe nur derart angeordnet werden müssen, dass sie in Vertiefungen des Stator-Blechpakets, insbesondere an dessen Innenseite, eingreifen.

Bei einer vorteilhaften Ausgestaltung sind Kontakthaken mit der Endscheibe formschlüssig verbunden sind. Von Vorteil ist dabei, dass die mechanische Verbindung einfach herstellbar ist. Die Kontakthaken sind dabei aus Metall und die Endscheibe aus Kunststoff, insbesondere mit hoher Isolierfestigkeit.

Bei einer vorteilhaften Ausgestaltung ist der Wicklungsdraht an Kontakthaken abgelegt. Von Vorteil ist dabei, dass hierzu ebenfalls kein Kippen sondern nur ein Parallelverschieben der Nadel notwendig ist.

Bei einer vorteilhaften Ausgestaltung ist die Verschaltung einer ersten Phase in einem ersten Raumbereich ausgeführt, die Verschaltung einer zweiten Phase in einem zweiten Raumbereich ausgeführt ist, wobei der erste Raumbereich größer ausgedehnt ist in radialer Richtung als der zweite, insbesondere größere Radien aufweist als der zweite. Insbesondere ist die Verschaltung einer ersten Phase in einem ersten Raumbereich ausgeführt, die Verschaltung einer zweiten Phase in einem zweiten Raumbereich ausgeführt ist, die Verschaltung einer dritten Phase in einem dritten Raumbereich ausgeführt ist, wobei der erste Raumbereich größer ausgedehnt ist in radialer Richtung als der zweite und dieser wiederum als der dritte, insbesondere weist der erste größere Radien auf als der zweite und dieser als der dritte. Von Vorteil ist dabei, dass die Nadel die Verschaltung des äußeren Bereiches ablegt und dann die Verschaltung weiter innen herstellt. Somit kommen sich keine Drähte in die Quere und die Raumbereiche werden effizient genutzt.

Vorzugsweise sind die Raumbereiche im Inneren eines jeweiligen gedachten Torus angeordnet. Dabei nehmen die Ausdehnungen, also maximalen Durchmesser der Tori von der ersten zur dritten Phase ab. Im Idealfall sind die Tori jeweils möglichst dünn. Somit steigt dann der Abstand zwischen den Verschaltungen und die Isolierfestigkeit ist verbessert.

Bei einer vorteilhaften Ausgestaltung wird beim Verschalten einer Phase zum Umlenken von Wicklungsdraht dieser um Umlenkpfosten geführt, die auf einem größeren Radius vorgesehen sind als die Radien der Raumbereiche. Dieses Umlenken ist also nicht zu den Raumbereichen der Verschaltung zu zählen.

Bei einer vorteilhaften Ausgestaltung sind die drei Raumbereiche an der axial gleichen Position vorgesehen. Von Vorteil ist dabei, dass der Motor möglichst geringe axiale Ausdehnung hat und somit kompakt ist.

Bei einer vorteilhaften Ausgestaltung weist die Endscheibe Umlenkpfosten, Trägerpfosten und/oder Winkel zur Drahtführung und Umlenkung auf. Von Vorteil ist dabei, dass die Endscheibe einstückig ausgeformt ist, so dass kein Mehraufwand beim Fertigen für die genannten Funktionsbereiche der Endscheibe vorhanden ist, also für Umlenkpfosten, Trägerpfosten und/oder Winkel.

Bei einer vorteilhaften Ausgestaltung ist die Endscheibe einstückig als Kunststoffspritzgussteil ausgeformt. Von Vorteil ist dabei, dass die Fertigung der Endscheibe sehr einfach und kostengünstig ist.

Bei einer vorteilhaften Ausgestaltung ist die Endscheibe durch die Spulenwicklungen in axialer Richtung am Blechpaket des Stators gehalten. Von Vorteil ist dabei, dass keine Haltemittel notwendig sind.

Bei einer vorteilhaften Ausgestaltung sind die Spulenwicklungen in Sternschaltung verschaltet. Von Vorteil ist dabei, dass die Sternschaltung ohne Platine und ohne andere Verschaltungsvorrichtungen ausführbar ist. Es ist bei der Erfindung als Vorrichtung nur die letzte Scheibe des Blechpaketes aus Kunststoff auszuführen und entsprechend zu formen, so dass dann auf diesem isolierenden Teil die Verschaltung ausführbar ist.

Bei einer vorteilhaften Ausgestaltung ist jeder Phase eine Serienschaltung von drei oder mehr seriell hintereinander geschalteten Einzelwicklungen zugeordnet und die Serienschaltungen sind am Sternpunkt zusammengeführt. Von Vorteil ist dabei, dass ein Wickelschema gefunden wurde, das ohne Umklappen der Nadel in einem Bewicklungsvorgang diese Verschaltungsart erzeugbar ist.

Wichtige Merkmale bei dem Wickelverfahren sind, dass es zum Herstellen eines Stators eines Elektromotors geeignet ist, wobei der Stator zu jeweiligen Phasen gehörige Spulenwicklungen umfasst, wobei die Verschaltung der zu der ersten Phase gehörigen Wicklungen in einem ersten Raumbereich ausgeführt wird,
danach die Verschaltung der zu einer zweiten Phase gehörigen Wicklungen in einem zweiten Raumbereich ausgeführt wird,
wobei der erste Raumbereich größer ausgedehnt ist in radialer Richtung als der zweite, insbesondere größere Radien aufweist als der zweite.

Von Vorteil ist dabei, dass die Raumbereiche der Verschaltung von außen nach innen angeordnet sind und sukzessive nacheinander verbraucht werden. Somit kann die Nadel durch bloßes Parallel-Verschieben die Raumbereiche abfahren und dabei die Verschaltungen erstellen. Es gibt keine Störungen des Drahtes während des Wickelns.

Insbesondere wird die Verschaltung der zu der ersten Phase gehörigen Wicklungen in einem ersten Raumbereich ausgeführt wird,
danach die Verschaltung der zu einer zweiten Phase gehörigen Wicklungen in einem zweiten Raumbereich ausgeführt wird,
danach die Verschaltung der zu einer dritten Phase gehörigen Wicklungen in einem dritten Raumbereich ausgeführt wird.

Von Vorteil ist dabei, dass das Verfahren bei einem Drehstrommotor, insbesondere sogar bei einem Synchronmotor, ausführbar ist.

Bei einer vorteilhaften Ausgestaltung wird das Wickeln und die Verschaltung aller Statorwicklungen durch bloßes Verschieben der Nadel innerhalb einer Ebene erreicht, wobei die Nadel stets gleich orientiert bleibt und das Statorblechpaket zeitabschnittsweise gedreht wird. Von Vorteil ist dabei, dass die Maschine mechanisch robust, einfach und kostengünstig ausführbar ist. Si muss nur eine Drehachse und zwei Linearachsen aufweisen. Winkelbewegungen oder Eigendrehungen der Nadel sind nicht erforderlich.

Bei einer vorteilhaften Ausgestaltung sind die Statorwicklungen und die Verschaltung mit einem Wickelverfahren - wie beschrieben - hergestellt, wobei die Verschaltung auf einer Endscheibe ausgeführt ist. Von Vorteil ist dabei, dass nur eine Endscheibe, also ein axialer Bereich, notwendig ist, in welchem die Verschattung ausgeführt wird.

Zur Verschaltung zählt nicht nur die elektrische Verbindung in Reihe geschalteter Spulen sondern auch die Verbindung mit den Kontakthaken, die durch dem Wickeln nachfolgendes Schweißen zum Herstellen einer Schweißverbindung, ausführbar ist

Weitere Vorteile ergeben sich aus den Unteransprüchen.

### Bezugszeichenliste

10 Endscheibe
11 Trägerpfosten
12 Winkel
13 Umlenkpfosten, gerade
14 Umlenkpfosten, winklig
15 Nasen
21 Kontakthaken
22 Kontakthaken
23 Kontakthaken
24 Kontakthaken
31 großer Radius
32 mittlerer Radius
33 kleiner Radius
41 Wicklungsdraht
42 Spulenwicklung
U, V, W Phase

Die Erfindung wird nun anhand von Abbildungen näher erläutert:
Bei Wickelmaschinen zum Herstellen von Statorwicklungen tritt der Wicklungsdraht aus der einer sogenannten Nadel aus. Vorteiligerweise muss bei der Erfindung diese Nadel nur parallel in einer Ebene geschoben werden.

In der Figur 1 ist eine erfindungsgemäße Endscheibe 10, die an einem axialen Ende des Statorblechpaketes aufgesteckt wird. Sie ist formschlüssig mit dem Statorblechpaket verbunden. Hierzu sind die Nasen 15 vorgesehen, die in eine jeweilige sich axial erstreckende Zwischennut des Stator-Blechpaketes eingreift. Die formschlüssige Verbindung verhindert somit ein relatives Drehen der Endscheibe gegen das Statorblechpaket um die Achse des Stators. In axialer Richtung wird die Endscheibe durch die Wicklungen aufgepresst und gehalten. Das heißt, dass erst nach Bewickeln der Statorwicklung ein Halt für die Endscheibe vorliegt.

Der wesentliche Vorteil der Erfindung liegt hauptsächlich darin, dass ein sehr einfach aufgebauter Wickelapparat verwendbar ist. Denn die Wickelnadel muss nur in axialer Richtung und radialer Richtung bewegbar sein, also zwei Achsen aufweisen. Dazu ist das Statorblechpaket um seine Achse drehbar vorzusehen. Es sind also keine Greifer notwendig und die Nadel ist auch nicht umklappbar auszuführen.

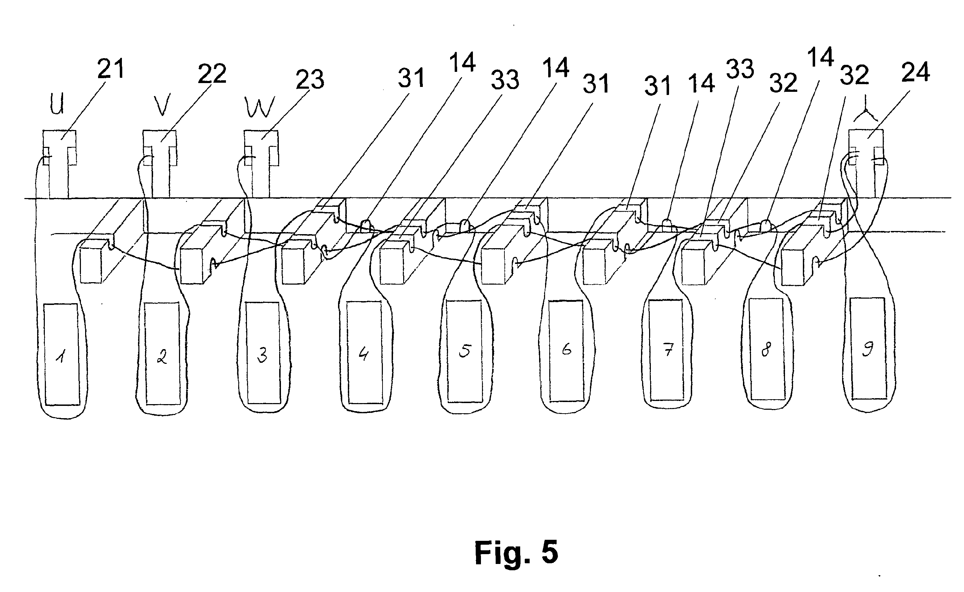

Das Wickelschema ist in Figur 5 gezeigt. Die Nadel verbindet dabei ausgehend vom Kontakthaken 23 zuerst die drei seriell gewickelten Teilwicklungen der W-Phase. Die Umlenkung geschieht an Umlenkpfosten und ist auf dem großen Radius ausgeführt. Somit ist dort auch die serielle Verbindung ausgeführt, indem nämlich die Wicklung nacheinander in der aus Figur 5 ersichtlichen Reihenfolge ausgeführt wird, also nach der Nummer 3, die Nummer 6 und dann die Nummer 9. Zuletzt wird dann der Draht auf dem Kontakthaken 24 des Sternpunktes abgelegt. Danach wird dann die Bewicklung der drei seriell beschalteten Teilwicklungen der V-Phase ausgeführt auf dem mittleren Radius. Danach wird die entsprechende Wicklung der U-Phase ausgeführt.

Somit wird an dem Kontakthaken 21 die U-Phase anschließbar, am Kontakthaken 22 die V-Phase und am Kontakthaken 23 die W-Phase. Am Kontakthaken 24 ist der Sternpunkt anschließbar.

In Figur 1 ist die Endscheibe 10 gezeigt, die einstückig mit Trägerpfosten 11, Winkel 12 und Umlenkpfosten 13 und Umlenkpfosten 14 ausgeführt ist. Vorzugsweise ist sie als Spritzgussteil aus Kunststoff herstellbar.

Die Kontakthaken 21,22, 23, 24 sind formschlüssig aufgesteckt verbunden mit der Endscheibe 10. Bei weiteren erfindungsgemäßen Ausführungsbeispielen ist ein Aufrasten ausgeführt.

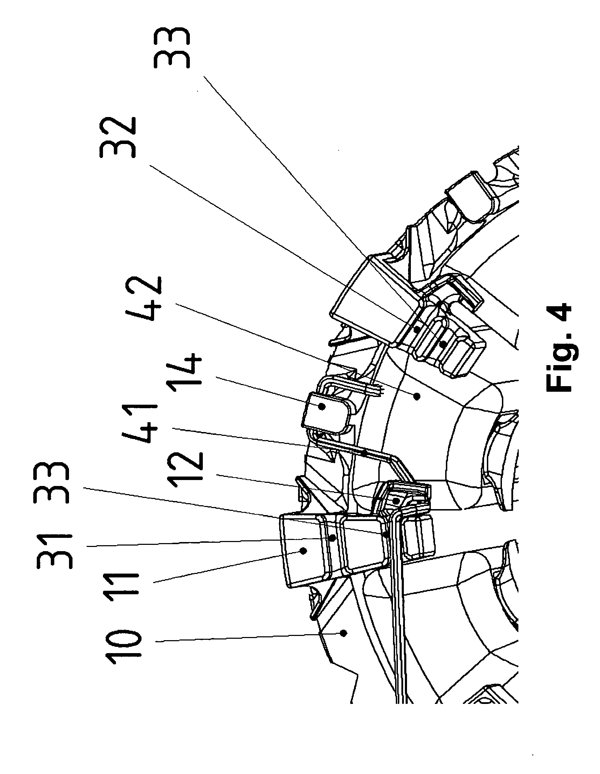

Die Umlenkpfosten 13 dienen der im Wesentlichen gerades Umlenkung des Drahtes. Die Umlenkpfosten 14 dienen der Winkel-Umlenkung des Wicklungsdrahtes 41, wie in dem als Figur 4 groß dargestellten Ausschnitt ersichtlich. Die Trägerpfosten 11 dienen der Drahtführung und stellen hierzu Vertiefungen zur Verfügung, in welche der Draht einlegbar ist und somit geführt ist. Dies ist ebenfalls auch aus Figur 4 ersichtlich, wobei dort der Wicklungsdraht 41 beispielhaft gezeigt ist.

An den Kontakthaken wird eine Schweißverbindung ausgeführt. Außerdem wird zum elektrischen Anschließen der Phasen Litze eingelegt und ebenfalls verschweißt.

In Figur 4 ist auch die Spule 42 angedeutet, wobei die einzelnen Wicklungsdrähte nicht dargestellt sind.

Die Endscheibe ist derart gestaltet, dass sie die Toleranzen für die Position der Kontakthaken verursacht. Als zentrales Element ist sie also bestimmend für geometrische Abweichungen. Somit kann die Endscheibe als einzelnes Teil mit hoher Genauigkeit gefertigt werden und führt dadurch zu hoher Genauigkeit der Drahtführung und der Positionierung der Kontakthaken.

Jedes weitere zusätzliche Teil erhöht die Toleranzabweichungen des Endproduktes.

Bei der Erfindung sind also nur zwei lineare Achsen und eine Drehachse notwendig.

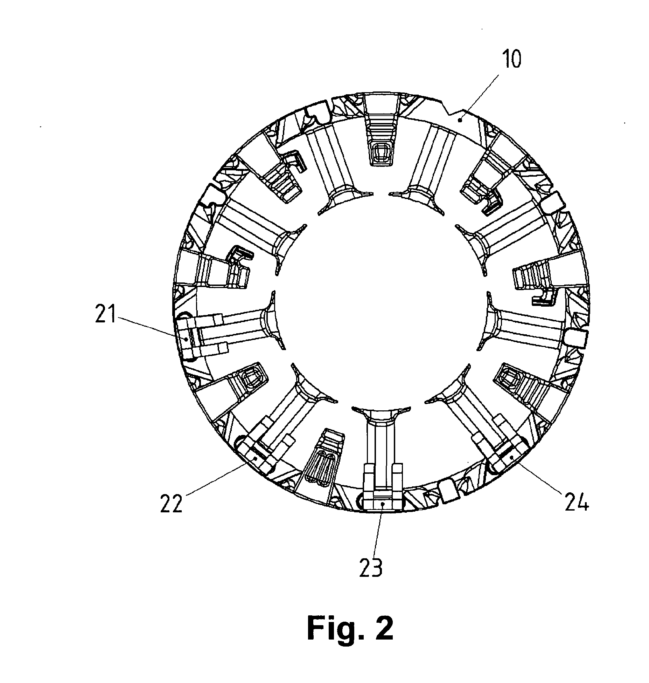

In der Figur 2 ist eine Ansicht von oben auf die Endscheibe gezeigt.

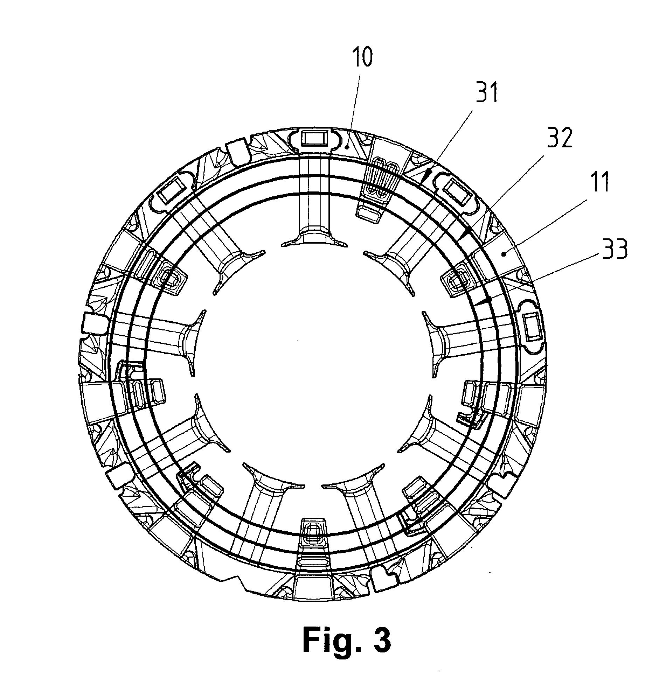

In der Figur 3 ist zusätzlich zur Figur 2 der Raumbereich der Leiterbahnen zur Verschaltung angedeutet. Dabei ist der erste Raumbereich der Verschaltung auf dem großen Radius 31 vorgesehen. Der zweite Raumbereich der Verschaltung ist auf dem mittleren Radius 32 vorgesehen und der dritte auf dem kleinsten Radius 33.

Figur 4 soll das Wickelschema näher erläutern und ist daher nur symbolisch angedeutet und linearisiert dargestellt. Der Umfang ist also die Abszisse der Darstellung. Vertiefungen zur Drahtführung, die auf Radien 31,32, 33 liegen, sind mit diesen Bezugszeichen gekennzeichnet. Somit ist erkennbar, dass die Verschaltung auf den jeweiligen Radien ausgeführt wird.

Nur zum Umlenken von Wicklungsdraht wird auf die Umlenkpfosten 14 ausgewichen, die auf einem sehr großen Radius liegen, der größer als die Radien 31,32,33 der Verschaltungsbereiche ist.

Wichtig ist bei der Erfindung, dass durch die Einführung eines separaten zusätzlichen Raumbereichs zum Wickeln der Verschaltung, der räumlich getrennt ist vom Raumbereich des Wickelns der Stator-Spulenwicklungen, das Verschalten mittels der Wickelmaschine ermöglicht ist. Dabei ist sehr wichtig, dass sich Wicklungsdrahtbereiche, die Phasen mit unterschiedlichem Potential zugeordnet sind, nicht kreuzen und nicht berührend parallel geführt werden.

Bei weiteren erfindungsgemäßen Ausführungsbeispielen sind statt der gezeigten drei seriell hintereinander verschalteten Einzelwicklungen jeder Phase u, v, w mehr seriell hintereinander verschalteten Einzelwicklungen vorgesehen.

## Patentansprüche

1. Elektromotor, umfassend Stator und dessen Spulenwicklungen (42),
**wobei** die Verschaltung der Spulenwicklungen (42) an einer Endscheibe (10) des Stator-Blechpakets ausführbar ist,
**wobei mit der Endscheibe (10) einstückig ausgebildete Trägerpfosten (11) mit auf einem ersten, zweiten und dritten Radius (33, 32, 31) angeordneten Vertiefungen zur Drahtführung derart vorgesehen sind, dass**
- **die Verschaltung einer ersten Phase in einem ersten auf dem ersten Radius (31) vorgesehenen Raumbereich ausgeführt ist,**
- **die Verschaltung einer zweiten Phase in einem zweiten auf dem zweiten Radius (32) vorgesehenen Raumbereich ausgeführt ist,**
- **die Verschaltung einer dritten Phase in einem dritten auf dem dritten Radius (33) vorgesehenen Raumbereich ausgeführt ist,**
**wobei der erste Raumbereich größer ausgedehnt ist in radialer Richtung als der zweite Raumbereich und der zweite Raumbereich größer ausgedehnt ist in radialer Richtung als der dritte Raumbereich,**
**wobei der erste Raumbereich größere Radien (31) aufweist als der zweite Raumbereich und der zweite Bereich größere Radien (32) aufweist als der dritte Raumbereich,**
**wobei beim Verschalten einer Phase zum Umlenken von Wicklungsdraht (41) dieser um Umlenkpfosten (13, 14) geführt wird, die auf einem größeren Radius vorgesehen sind als die Radien (31, 32, 33) der Raumbereiche.**

2. Elektromotor nach Anspruch 1,
**dadurch gekennzeichnet, dass**
die Endscheibe (10) an einem axialen Ende des Statorblechpakets vorgesehen ist.

3. Elektromotor nach einem der vorangegangenen Ansprüche,
**dadurch gekennzeichnet, dass**
die Endscheibe (10) mit dem Statorblechpaket formschlüssig verbunden ist, insbesondere in Umfangsrichtung.

4. Elektromotor nach einem der vorangegangenen Ansprüche,
**dadurch gekennzeichnet, dass**
Kontakthaken (22, 23, 24) mit der Endscheibe (10) formschlüssig verbunden sind.

5. Elektromotor nach einem der vorangegangenen Ansprüche,
**dadurch gekennzeichnet, dass**
der Wicklungsdraht (41) an Kontakthaken (22, 23, 24) abgelegt ist.

6. Elektromotor nach einem der vorangegangenen Ansprüche,
**dadurch gekennzeichnet, dass**
die drei Raumbereiche an der axial gleichen Position vorgesehen sind.

7. Elektromotor nach einem der vorangegangenen Ansprüche,
**dadurch gekennzeichnet, dass**
die Endscheibe (10) Umlenkpfosten (13, 14), Trägerpfosten (11) und/oder Winkel zur Drahtführung und Umlenkung aufweist.

8. Elektromotor nach einem der vorangegangenen Ansprüche,
**dadurch gekennzeichnet, dass**
die Endscheibe (10) einstückig als Kunststoffspritzgussteil ausgeformt ist.

9. Elektromotor nach einem der vorangegangenen Ansprüche,
**dadurch gekennzeichnet, dass**
die Endscheibe (10) durch die Spulenwicklungen (42) in axialer Richtung am Blechpaket des Stators gehalten ist.

10. Elektromotor nach einem der vorangegangenen Ansprüche,
**dadurch gekennzeichnet, dass**
die Spulenwicklungen (42) in Sternschaltung verschaltet sind.

11. Elektromotor nach einem der vorangegangenen Ansprüche,
**dadurch gekennzeichnet, dass**
jeder Phase eine Serienschaltung von drei oder mehr seriell hintereinander geschalteten Einzelwicklungen zugeordnet ist und die Serienschaltungen am Sternpunkt zusammengeführt sind.

12. Wickelverfahren zum Herstellen eines Stators eines Elektromotors,
wobei der Stator zu jeweiligen Phasen gehörige Spulenwicklungen (42) umfasst,
**wobei die Verschaltung der Spulenwicklungen (42) an einer Endscheibe (10) des Statorblechpakets ausgeführt wird,**
**wobei mit der Endscheibe (10) einstückig ausgebildete Trägerpfosten (11) mit auf einem ersten, zweite und dritten Radius (33, 32, 31) angeordneten Vertiefungen zur Drahtführung derart vorgesehen sind,**
**dass die Verschaltung einer ersten Phase in einem ersten auf dem ersten Radius (31) vorgesehenen Raumbereich ausgeführt ist,**
**danach die Verschaltung einer zweiten Phase in einem zweiten auf dem zweiten Radius (32) vorgesehenen Raumbereich ausgeführt ist,**
**danach die Verschaltung einer dritten Phase in einem dritten auf dem dritten Radius (33) vorgesehenen Raumbereich ausgeführt ist,**
**wobei der erste Raumbereich größer ausgedehnt ist in radialer Richtung als der zweite Raumbereich,**
**wobei der zweite Raumbereich größer ausgedehnt ist in radialer Richtung als der dritte Raumbereich,**
**wobei der erste Raumbereich größere Radien aufweist als der zweite Raumbereich,**
**wobei der zweite Raumbereich größere Radien aufweist als der dritte Raumbereich,**
**wobei beim Verschalten einer Phase zum Umlenken von Wicklungsdraht (41) dieser um Umlenkpfosten (13, 14) geführt wird, die auf einem größeren Radius vorgesehen sind als die Radien (31, 32, 33) der Raumbereiche,** wobei **das Wickeln und die Verschaltung all dieser genannten Spulenwicklungen (42) durch bloßes Verschieben der Nadel innerhalb einer Ebene erreicht wird,**
**wobei die Nadel stets gleich orientiert bleibt und das Statorblechpaket zeitabschnittsweise gedreht wird.**

13. Elektromotor mit Stator,
**dadurch gekennzeichnet, dass**
die **Spulenwicklungen (42)** und die Verschaltung mit einem Wickelverfahren nach Anspruch 12 hergestellt sind, insbesondere wobei die Verschaltung auf einer Endscheibe (10) ausgeführt ist.

## Claims

1. Electric motor, comprising a stator and coil windings (42) of the latter,
wherein the wiring of the coil windings (42) is implementable on an end plate (10) of the stator laminated core,
wherein support posts (11), integrally formed with the end plate (10) and having indentations for wire guidance arranged on a first, second and third radius (33, 32, 31), are provided in such a manner that
- the wiring of a first phase is implemented in a first spatial region provided on the first radius (31),
- the wiring of a second phase is implemented in a second spatial region provided on the second radius (32),
- the wiring of a third phase is implemented in a third spatial region provided on the third radius (33),
wherein the first spatial region is extended greater in the radial direction than the second spatial region and the second spatial region is extended greater in the radial direction than the third spatial region,
wherein the first spatial region has greater radii (31) than the second spatial region and the second region has greater radii (32) than the third spatial region,
wherein, on the wiring of a phase, for deflecting winding wire (41) the latter is guided around deflection posts (13, 14) which are provided on a greater radius than the radii (31, 32, 33) of the spatial regions.

2. Electric motor according to Claim 1,
**characterised in that**
the end plate (10) is provided at an axial end of the stator laminated core.

3. Electric motor according to one of the preceding claims,
**characterised in that**
the end plate (10) is connected in a form-locking manner to the stator laminated core, in particular in the circumferential direction.

4. Electric motor according to one of the preceding claims,
**characterised in that**
contact hooks (22, 23, 24) are connected in a form-locking manner to the end plate (10).

5. Electric motor according to one of the preceding claims,
**characterised in that**
the winding wire (41) is laid down on contact hooks (22, 23, 24) .

6. Electric motor according to one of the preceding claims,
**characterised in that**
the three spatial regions are provided at the axially same position.

7. Electric motor according to one of the preceding claims,
**characterised in that**
the end plate (10) comprises deflection posts (13, 14), support posts (11) and/or angles for wire guidance and deflection.

8. Electric motor according to one of the preceding claims,
**characterised in that**
the end plate (10) is integrally formed as a plastic injection-moulded part.

9. Electric motor according to one of the preceding claims,
**characterised in that**
the end plate (10) is held in the axial direction on the laminated core of the stator by the coil windings (42).

10. Electric motor according to one of the preceding claims,
**characterised in that**
the coil windings (42) are wired in a star connection.

11. Electric motor according to one of the preceding claims,
**characterised in that**
a series connection of three or more individual windings connected in series is assigned to each phase and the series connections are brought together at the star point.

12. Winding method for producing a stator of an electric motor,
wherein the stator comprises coil windings (42) associated with respective phases,
wherein the wiring of the coil windings (42) is implemented on an end plate (10) of the stator laminated core,
wherein support posts (11), integrally formed with the end plate (10) and having indentations for wire guidance arranged on a first, second and third radius (33, 32, 31), are provided in such a manner
that the wiring of a first phase is implemented in a first spatial region provided on the first radius (31),
after that the wiring of a second phase is implemented in a second spatial region provided on the second radius (32), after that the wiring of a third phase is implemented in a third spatial region provided on the third radius (33), wherein the first spatial region is extended greater in the radial direction than the second spatial region,
wherein the second spatial region is extended greater in the radial direction than the third spatial region,
wherein the first spatial region has greater radii than the second spatial region,
wherein the second spatial region has greater radii than the third spatial region,
wherein, on the wiring of a phase, for deflecting winding wire (41) the latter is guided around deflection posts (13, 14) which are provided on a greater radius than the radii (31, 32, 33) of the spatial regions,
wherein the winding and the wiring of all these coil windings (42) mentioned is achieved by simply displacing the needle within a plane,
wherein the needle always remains with the same orientation and the stator laminated core is rotated at periods of time.

13. Electric motor having a stator,
**characterised in that**
the coil windings (42) and the wiring are produced using a winding method according to Claim 12, in particular wherein the wiring is implemented on an end plate (10).

## Revendications

1. Moteur électrique comprenant un stator et les enroulements (42) de la bobine de ce dernier,
sachant que la connexion desdits enroulements (42) de la bobine peut être effectuée au niveau d'un disque extrême (10) de l'empilement de tôles statoriques,
sachant que des plots de support (11), réalisés d'un seul tenant avec ledit disque extrême (10) et munis de renfoncements situés sur des premier, deuxième et troisième rayons (31, 32, 33) en vue du guidage du fil métallique, sont prévus de façon telle que
- la connexion d'une première phase soit exécutée dans une première zone spatiale prévue sur le premier rayon (31),
- la connexion d'une deuxième phase soit exécutée dans une deuxième zone spatiale prévue sur le deuxième rayon (32),
- la connexion d'une troisième phase soit exécutée dans une troisième zone spatiale prévue sur le troisième rayon (33),
sachant que la première zone spatiale présente, dans le sens radial, une plus grande étendue que la deuxième zone spatiale et ladite deuxième zone spatiale présente, dans le sens radial, une plus grande étendue que la troisième zone spatiale,
sachant que la première zone spatiale offre des rayons (31) plus grands que ceux de la deuxième zone spatiale et ladite deuxième zone spatiale offre des rayons (32) plus grands que ceux de la troisième zone spatiale,
sachant qu'en vue de dévier un fil métallique de bobinage (41), au stade de la connexion d'une phase, ledit fil est guidé autour de plots de renvoi (13, 14) prévus sur un rayon plus grand que les rayons (31, 32, 33) des zones spatiales.

2. Moteur électrique selon la revendication 1,
**caractérisé par le fait que**
le disque extrême (10) est prévu à une extrémité axiale de l'empilement de tôles statoriques.

3. Moteur électrique selon l'une des revendications précédentes,
**caractérisé par le fait que**
le disque extrême (10) est relié à l'empilement de tôles statoriques par complémentarité de formes, en particulier dans le sens périphérique.

4. Moteur électrique selon l'une des revendications précédentes,
**caractérisé par le fait que**
des crochets de contact (22, 23, 24) sont reliés au disque extrême (10) par complémentarité de formes.

5. Moteur électrique selon l'une des revendications précédentes,
**caractérisé par le fait que**
le fil métallique de bobinage (41) est mis en place sur des crochets de contact (22, 23, 24).

6. Moteur électrique selon l'une des revendications précédentes,
**caractérisé par le fait que**
les trois zones spatiales sont prévues au même emplacement dans le sens axial.

7. Moteur électrique selon l'une des revendications précédentes,
**caractérisé par le fait que**
le disque extrême (10) comprend des plots de renvoi (13, 14), des plots de support (11) et/ou des cornières, en vue du guidage du fil métallique et du renvoi.

8. Moteur électrique selon l'une des revendications précédentes,
**caractérisé par le fait que**
le disque extrême (10) est formé d'un seul tenant, en tant que pièce en matière plastique venue de moulage par injection.

9. Moteur électrique selon l'une des revendications précédentes,
**caractérisé par le fait que**
le disque extrême (10) est retenu sur l'empilement de tôles statoriques du stator, dans le sens axial, par l'intermédiaire des enroulements (42) de la bobine.

10. Moteur électrique selon l'une des revendications précédentes,
**caractérisé par le fait que**
les enroulements (42) de la bobine sont interconnectés par branchement en étoile.

11. Moteur électrique selon l'une des revendications précédentes,
**caractérisé par le fait**
**qu'**un branchement en série constitué d'enroulements individuels au nombre de trois ou plus, connectés en série les uns derrière les autres, est affecté à chaque phase, et les branchements en série sont regroupés au point neutre.

12. Procédé de bobinage dévolu à la fabrication d'un stator d'un moteur électrique,
ledit stator comprenant des enroulements (42) de bobine, qui sont associés à des phases respectives,
sachant que la connexion desdits enroulements (42) de la bobine est effectuée au niveau d'un disque extrême (10) de l'empilement de tôles statoriques,
sachant que des plots de support (11), réalisés d'un seul tenant avec ledit disque extrême (10) et munis de renfoncements situés sur des premier, deuxième et troisième rayons (31, 32, 33) en vue du guidage du fil métallique, sont prévus de façon telle que la connexion d'une première phase soit exécutée dans une première zone spatiale prévue sur le premier rayon (31),
la connexion d'une deuxième phase étant ensuite exécutée dans une deuxième zone spatiale prévue sur le deuxième rayon (32),
la connexion d'une troisième phase étant ensuite exécutée dans une troisième zone spatiale prévue sur le troisième rayon (33),
la première zone spatiale présentant, dans le sens radial, une plus grande étendue que la deuxième zone spatiale,
ladite deuxième zone spatiale présentant, dans le sens radial, une plus grande étendue que la troisième zone spatiale,
la première zone spatiale offrant des rayons plus grands que ceux de la deuxième zone spatiale,
ladite deuxième zone spatiale offrant des rayons plus grands que ceux de la troisième zone spatiale,
sachant qu'en vue de dévier un fil métallique de bobinage (41), au stade de la connexion d'une phase, ledit fil est guidé autour de plots de renvoi (13, 14) prévus sur un rayon plus grand que les rayons (31, 32, 33) des zones spatiales,
sachant que le bobinage et la connexion de tous ces enroulements précités (42) de la bobine sont obtenus par déplacement pur et simple de l'aiguille dans les limites d'un plan, ladite aiguille conservant toujours la même orientation, et l'empilement de tôles statoriques étant animé d'une rotation par périodes.

13. Moteur électrique muni d'un stator,
**caractérisé par le fait que**
les enroulements (42) de la bobine, et la connexion, sont instaurés par un procédé de bobinage conforme à la revendication 12, sachant notamment que ladite connexion est effectuée sur un disque extrême (10).
